Europäisches Patentamt

(19) European Patent Office

Office européen des brevets

(11) Numéro de publication: **0 085 628**
**B1**

(12) **FASCICULE DE BREVET EUROPEEN**

(45) Date de publication du fascicule du brevet: **20.05.87**

(51) Int. Cl.⁴: **G 01 S 13/52,** G 01 S 7/28

(21) Numéro de dépôt: **83400206.5**

(22) Date de dépôt: **28.01.83**

(54) **Dispositif d'élimination des retours de mer pour système radar.**

(30) Priorité: **28.01.82 FR 8201353**

(43) Date de publication de la demande:
**10.08.83 Bulletin 83/32**

(45) Mention de la délivrance du brevet:
**20.05.87 Bulletin 87/21**

(84) Etats contractants désignés:
**DE GB IT NL**

(56) Documents cités:
**US-A-2 997 707**
**US-A-3 121 870**
**US-A-3 806 923**
**US-A-3 898 654**

**M.I. SKOLNIK, RADAR HANDBOOK, chapitre 17, 1970, pages 17-1 - 17-59 Mc-Graw-Hill: "MTI-Radar"**

(73) Titulaire: **THOMSON-CSF**
**173, Boulevard Haussmann**
**F-75379 Paris Cedex 08 (FR)**

(72) Inventeur: **Bouchetard, Pierre**
**THOMSON-CSF SCPI 173, bld Haussmann**
**F-75379 Paris Cedex 08 (FR)**

(74) Mandataire: **Benoit, Monique et al**
**THOMSON-CSF SCPI 19, avenue de Messine**
**F-75008 Paris (FR)**

## Description

La présente invention concerne les systèmes de détection radar et principalement ceux qui fonctionnent dans un environnement marin où la présence de la houle engendre des échos (appelés retours de mer, ou "clutter" en anglais) qui ne doivent pas dissimuler les échos utiles provenant de cibles qu'on cherche à détecter (bateaux, phares, bouées, rochers, côtes, etc.).

Très concrètement, les retours de mer provoquent sur l'écran de visualisation du système radar un nuage confus qui rend difficile l'observation des obstacles intéressants.

On cherche donc à les éliminer sans faire disparaître du même coup les cibles utiles et ceci même si les cibles renvoient des échos d'amplitude plus faible que les retours de mer.

Les dispositifs qui ont été proposés antérieurement sont principalement:

— des dispositifs détectant les zones denses en échos et modifiant dans ces zones les critères d'extraction des échos, c'est à dire les critères de discrimination entre les échos utiles et le bruit. Par exemple, on peut modifier la constante de temps de différentiation de l'étage de différentiation de la chaîne de réception des échos; on peut aussi modifier le taux de fausse alarme du système pour augmenter le nombre d'échos d'une même case distance à partir duquel on décide qu'il y a présence de cible et non bruit. Outre la complexité de ce genre de dispositif, l'inconvénient est la durée du traîtement qui doit se faire sur plusieurs récurrences d'émission du radar;

— des systèmes de détection de cibles mobiles connus sous le nom de MTI (pour "Mobile Target Indicator" ou Indicateur de cibles Mobiles), cohérent ou non-cohérent, décrits par SKOLNIK (McGRAW HILL Book Cy — Chapter 17); ces systèmes comparent le phase des échos d'une récurrence à celle des échos de la récurrence précédente. Ils présentent l'inconvénient d'être complexes et de faire disparaître certaines cibles. Une autre illustration de ces systèmes est décrite dans le brevet US 2 997 707 ou dans le brevet US 3 898 654, qui comportent en outre des moyens pour pallier certains défauts des systèmes MTI;

— des systèmes de visualisation des cibles mobiles pourvus d'un filtre de vitesse conçu pour éliminer les cibles ayant une vitesse tombant dans un certain spectre étroit qui est centré sur la vitesse moyenne de la houle. Le traitement fait encore appel à des circuits nombreux et complexes et fait disparaître certaines cibles;

— des extracteurs à traitement numérique, encore une fois complexes, mal adaptés aux radars à impulsions très courtes (50 nanosecondes par exemple).

L'invention propose un dispositif d'élimination des retours de mer assurant une extraction des cibles utiles, même celles donnant lieu à des échos plus faibles que les retours de mer, à l'aide d'un traitement analogique comprenant un nombre restreint d'éléments de circuit.

Le principe de l'invention repose sur la constatation que la variation d'amplitude entre deux retours de mer successifs dans une même tranche de distance, est négligeable si on la mesure à la sortie d'un amplificateur logarithmique: la houle est en effet un phénomène régulier. Les retours de mer se présenteront donc à la sortie de l'amplificateur logarithmique comme des impulsions successives d'amplitude constante (au moins sur quelques impulsions consécutives correspondant à une même tranche de distance).

Au contraire, une cible utile n'a aucune raison, sauf exception, de provoquer un écho de même amplitude que les retours de mer dans la même tranche de distance: l'écho utile sera plus faible ou plus fort mais a priori différent.

On propose donc selon l'invention de soustraire chaque écho du précédent; si la différence est nulle ou quasi nulle, on considère qu'il s'agit de deux retours de mer qu'on éliminera; si la différence n'est pas nulle, on considérera que l'un des échos est un retour de mer et l'autre est un écho utile.

Toutefois, cette soustraction ne doit être effectuée que si on est effectivement en présence de retours de mer, sans quoi on aboutirait à retrancher un écho utile d'un autre écho utile en faisant disparaître l'un des deux.

C'est pourquoi on prévoit selon l'invention de détecter la présence de clutter par un examen du nombre d'échos reçus dans une courte durée (quelques microsecondes); la houle donne en effet de manière caractéristique des échos très rapprochés, de sorte qu'on peut décider d'opérer sur le mode de la soustraction pour éliminer les retours de mer seulement si on reçoit un nombre d'échos supérieur à quelques unités (par exemple trois en quelques microsecondes).

Le dispositif selon l'invention, qui permet cette élimination des retours de mer à partir du signal vidéo issu de l'antenne radar et comprimé logarithmiquement, est plus précisément défini à la revendication 1.

Le moyen de détection de la présence de retours de mer est en pratique constitué par plusieurs bascules monostables recevant les échos extraits, et bouclées par des circuits logiques de manière qu'elles se déclenchent successivement en cascade, la dernière ne se déclenchant que si un nombre d'impulsions correspondant au nombre de bascules est parvenu à l'intérieur d'une durée déterminée par les bascules. On peut imaginer aussi un simple comptage des impulsions dans une durée déterminée par une horloge.

Le moyen de memorisation de l'amplitude d'un écho comprend de préférence un différentiateur réagissant au front arrière de l'écho et un itégrateur (réseau RC) qui conserve le niveau de l'impulsion de sortie du différentiateur. L'intégrateur peut être remis à zéro, lors de l'apparition de l'écho suivant par le signal issu d'un autre différentiateur qui réagit au front avant des échos.

Le moyen de soustraction reçoit sur une première entrée la sortie du différentiateur réagissant au front avant des échos et sur une deuxième entrée le signal de sortie de l'intégrateur, les gains étant ajustés sur les deux voies d'entrée du soustracteur pour que deux échos successifs identiques donnent en sortie du soustracteur un signal nul.

D'autres caractéristiques et avantages de l'invention apparaîtront à la lecture de la description détaillée qui suit et qui est faite en référence aux dessins annexés dans lesquels:

— la figure 1 montre un circuit de détection de présence de retours de mer,

— la figure 2 représente un diagramme temporel de signaux en divers points de la figure 1,

— la figure 3 montre le circuit selon l'invention pour l'élimination des retours de mer,

— la figure 4 montre un diagramme temporel de signaux en présence de retours de mer sans cible utile,

— la figure 5 montre un diagramme temporel de signaux en présence de retours de mer avec une cible utile donnant un écho important,

— la figure 6 montre un diagramme temporel de signaux en présence de retours de mer avec une cible utile donnant un écho plus faible que les retours de mer.

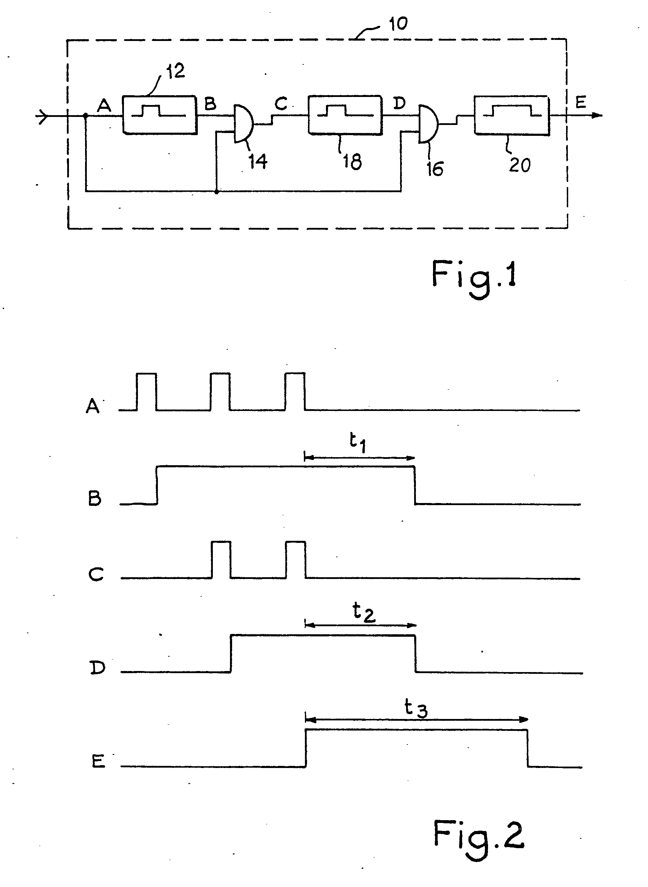

Le dispositif de détection des retours de mer est représenté sous la référence 10 à la figure 1. Il reçoit des signaux sous forme d'impulsions représentant les échos reçus. Par exemple, comme on le verra dans la suite de la description, ces signaux peuvent être issus d'un comparateur à seuil qui reçoit lui-même des impulsions issues d'un circuit différentiateur réagissant aux fronts avant des échos provenant, après compression logarithmique, de l'antenne radar.

Les impulsions ainsi traitées sont amenées à l'entrée d'une première bascule monostable redéclenchable 12 réagissant aux fronts de descente des impulsions, et sont amenées aussi à l'entrée d'une porte ET 14 et d'une porte ET 16 dont les sorties sont appliquées respectivement à l'entrée d'une deuxième bascule monostable redéclenchable 18 et d'une troisième bascule monostable redéclenchable 20. La deuxième entrée de la porte ET 14 provient de la sortie de là première bascule 12, et la deuxième entrée de la porte ET 16 provient de la sortie de la deuxième bascule 18. La sortie de la troisième bascule constitue le signal de décision de présence de retours de mer.

La troisième bascule ne peut basculer que si trois impulsions se sont succédées à l'entrée du circuit de détection 10 avec des intervalles de temps inférieurs aux durées $t_1$ et $t_2$ de basculement des deux premières bascules 12 et 18. Ces durée sont choisies de l'ordre de la microseconde (une microseconde correspondant à une distance radar d'environ 125 mètres).

Un signal de détection de houle apparaître donc à la sortie du circuit 10 tant que des impulsions se succèderont avec ces intervalles maximaux. La durée $t_3$ de la troisième bascule est choisie de préférence sensiblement plus grande que $t_1$ et $t_2$ pour éviter que l'absence momentanée de quelques impulsions de retour de mer d'amplitude suffisante ne soit interprétée comme une disparition de la houle. En effet, dans le cas où les retours de mer dépasseraient le seuil de bruit accepté dans le système radar, sans dépasser le seuil du comparateur placé juste en amont du circuit de détection 10, on assisterait à l'apparition d'une couronne brillante gênante sur l'appareil de visualisation. La constante de temps de la bascule 20 permet d'éliminer cette couronne par un réglage judicieux du temps pendant lequel le circuit d'élimination des retours de mer fonctionnera après la dernière impulsion effectivement transmise au circuit 10.

La figure 2 montre un diagramme temporel des signaux en divers points, à savoir respectivement:

— l'entrée A du circuit 10 avec des impulsions rapprochées dues à la houle,

— la sortie B de la première bascule 12 avec la durée $t_1$ qui s'écoule après la dernière impulsion reçue,

— la sortie C de la porte ET 14 qui ne laisse passer les retours de mer que si la bascule 12 a été déclenchée,

— la sortie D de la bascule 18 qui engendre une durée $t_2$ après le dernier retour de mer reçu,

— la sortie E de la bascule 20 qui n'est déclenchée (et qui dure une durée $t_3$) que si une impulsion d'entrée arrive pendant que la bascule 18 est déclenchée.

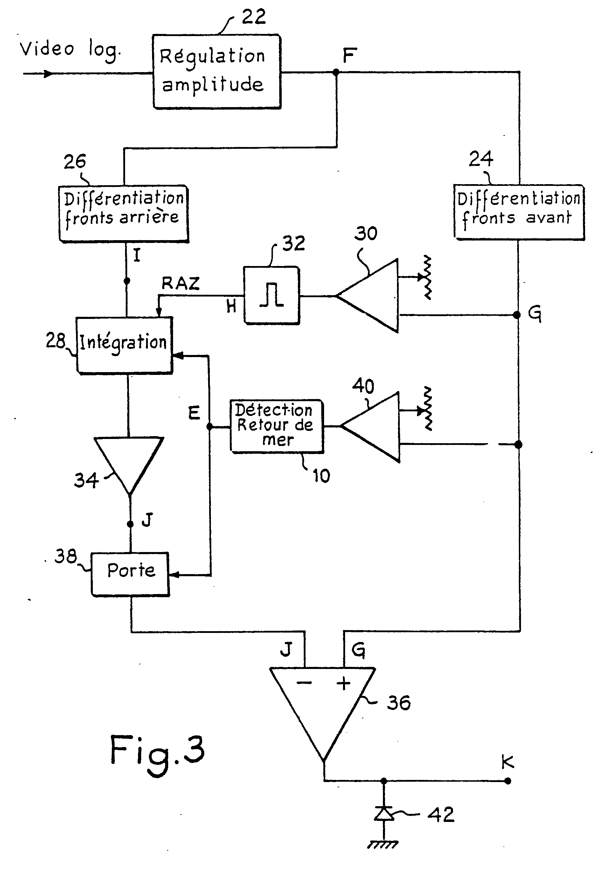

A la figure 3 on voit le dispositif d'élimination des retours de mer dont le circuit de détection de la figure 1 est une partie.

Il comprend un circuit de régulation d'amplitude 22 qui est généralement prévu dans les systèmes radar: ce circuit reçoit le signal vidéo comprimé logarithmiquement, issu de l'antenne du radar et traité de manière habituelle, et il établit par exemple un niveau d'amplification fonction du niveau de bruit présent dans le signal vidéo.

Le signal issu de ce circuit de régulation 22 est appliqué à deux circuits différentiateurs 24 et 26 dont le premier réagit aux front avent des impulsions représentant les échos détectés et l'autre réagit aux fronts arrière. A la sortie des circuits 24 et 26 on trouve des impulsions courtes, décalées dans le temps, et d'amplitude proportionnelle à l'amplitude des échos présents dans le signal vidéo comprimé logarithmiquement.

La sortie du deuxième circuit différentiateur 26 est appliquée à l'entrée d'un intégrateur 28 qui fournit, lors de la réception d'une impulsion représentant le front arrière d'un écho, un signal constant dont le niveau représente l'amplitude de sortie du circuit différentiateur.

Cet intégrateur est remis à zéro lors de l'apparition du front avant de l'écho suivant, par l'intermédiaire d'un comparateur à seuil 30 qui reçoit le signal de sortie du premier circuit différentiateur 24 et d'un circuit de mise en forme 32 (par exemple une bascule monostable) qui établit, lorsque le comparateur bascule du fait de la présence du front avant d'un écho, un signal propre à remettre à zéro le niveau de sortie de l'intégrateur (si l'intégrateur comprend une capacité de maintien, la remise à zéro s'effectue par décharge brusque de la capacité). Par exemple, le circuit de mise en forme 32 réagit au front de descente du comparateur pour que la remise à zéro de l'inégrateur ne s'effectue que lorsque l'écho suivant a commencé.

Ainsi, l'intégrateur 28 garde en mémoire le niveau de l'impulsion de sortie du différentiateur 26, niveau qui lui-même représente le niveau d'amplitude d'un écho reçu, depuis la fin de cet écho (front arrière) jusqu'après le début de l'écho suivant.

Entre l'apparition d'un nouvel écho et la remise à zéro de l'intégrateur, il existe donc un moment où l'on a simultanément dans le circuit une impulsion de niveau proportionnel à l'amplitude d'un écho et un signal bloqué de niveau proportionnel à l'amplitude de l'écho précédent. On s'arrange pour que les coefficients de proportionalité soient les mêmes ou on compense les différences par un amplificateur (ou un atténuateur) 34, et on effectue la soustraction des deux niveaux dans un soustracteur 36.

Toutefois, le signal de sortie de l'intégrateur 28 est transmis à l'entrée négative du soustracteur 36 par l'intermédiaire d'une porte 38 qui est ouverte par le circuit 10 de détection de présence de houle afin que la soustraction ne soit opérée qu'en présence de houle, tandis qu'en l'absence de houle un traitement normal des échos radar est effectué.

D'autre part, le fonctionnement de l'intégrateur 28 est inhibé en l'absence de houle par le circuit de détection 10.

Comme on l'a expliqué en référence à la figure 1, le circuit de détection 10 peut recevoir des impulsions d'un comparateur à seuil 40 qui lui même reçoit des impulsions issues du circuit différentiateur 24, c'est à dire des impulsions apparaissant à chaque front de montée d'un écho et proportionnelles à l'amplitude de cet écho (lui-même comprimé logarithmiquement).

La sortie du soustracteur 36, redressée par une diode 42 pour éliminer la partie négative du signal, constitue la sortie du circuit d'élimination des retours de mer, et cette sortie produit soit des impulsions normales à chaque front avant d'écho radar (lorsqu'il n'y a pas de houle), soit des impulsions qui résultant de la différence entre l'amplitude d'une impulsion et celle de l'impulsion précédente (en présence de retours de mer détectés comme tels par le circuit 10).

On va voir comment la sortie du soustracteur 36 met en valeur les échos utiles en supprimant les retours de mer.

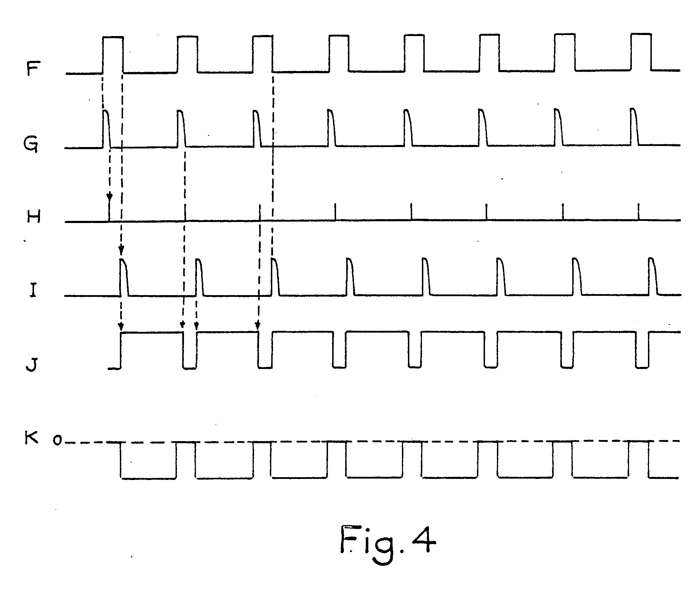

Les figures 4 à 6, qui ne s'intéressent qu'au cas où des retours de mer ont été détectés, montrent des diagrammes temporels de signaux en divers points du circuit, à savoir respectivement:
— à l'entrée F des différentiateurs,
— à la sortie G du différentiateur 24 réagissant aux fronts avant des échos,
— á la sortie H du circuit de mise en forme 32,

— la sortie I du différentiateur 26 réagissant aux fronts arrière des échos,
— à la sortie J de l'amplificateur 34 qui soit l'intégrateur 28,
— à la sortie K du soustracteur 36 avant redressement c'est-à-dire en figurant les résultats négatifs des soustractions effectuées bien que la diode 42 supprime ces résultats négatifs.

A la figure 4, seuls des retours de mer parviennent dans le signal vidéo comprimé logarithmiquement à l'entrée du circuit d'élimination. Etant donnée la compression logarithmique et étant donnée la nature régulière de la houle marine, les échos successifs ont une amplitude qui ne varie pas sensiblement d'un écho au suivant.

Les fronts avant différenciés sont visibles à la ligne G et les fronts arrière différenciés à la ligne I. La ligne J montre la sortie de l'intégrateur 28, ramenée par l'amplificateur 34 à une amplitude telle que le niveau des replats du signal intégré pour un écho est égal au niveau de crête du front avant différencié du même écho.

La soustraction effectuée à la ligne K donne un signal négatif ou nul en permanence car, si on part du front arrière d'un écho, on voit que le niveau sur l'entrée négative du soustracteur est toujours supérieur ou égal au niveau sur l'entrée positive.

La diode 42, connectée en parallèle sur la sortie du soustracteur, élimine franchement toute la partie négative du signal théoriquement fourni par le soustracteur. Les échos de retours de mer sont donc totalement éliminés.

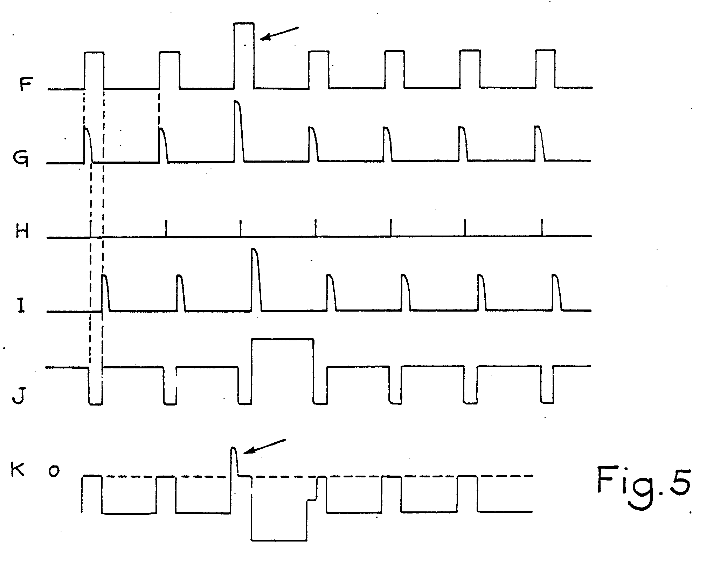

A la figure 5 on suppose qu'on écho utile d'amplitude supérieure aux retours de mer est présent parmi les retours de mer. Pour simplifier on a figuré cet écho à la place d'un retour de mer, mais il pourrait se situer n'importe où. Cet écho est désigné par la flèche à la ligne F de la figure 5.

Les lignes G et I montrent nettement les fronts avant et arrière différenciés de cet écho utile, fronts qui se distinguent par leur amplitude supérieure à celle des fronts des retours de mer.

La ligne J montre nettement le niveau de sortie de l'intégrateur, plus élevé après le front arrière de l'écho utile qu'après les fronts arrière des autres échos.

Enfin, la ligne K montre que la soustraction des niveaux des lignes G et J engendre une courbe qui présente un pic (désigné par une flèche sur la ligne K), au moment du front avant de l'écho utile. Ce pic est positif et n'est donc pas effecté par la diode 42.

Ce pic est le seul point où la soustraction des lignes G et J fournit un résultat positif. Seul ce pic est par conséquent transmis à la sortie du circuit et on receuille donc une information sur la présence d'un écho utile d'amplitude supérieure aux retours de mer.

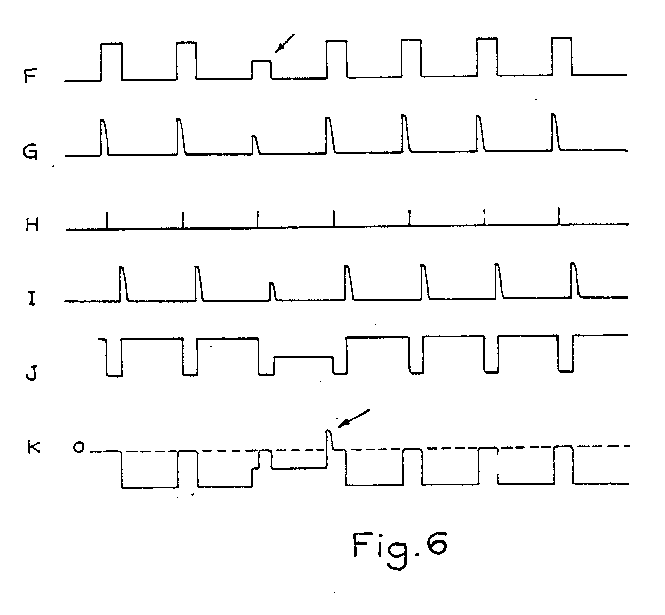

A la figure 6, on suppose qu'un écho utile d'amplitude inférieure aux retours de mer est présent parmi ces derniers. Pour simplifier on a figuré cet écho à la place d'un retour de mer, mais il pourrait être n'importe où. Il est désigné par une flèche sur la ligne F.

Les lignes G et I montrent les fronts avant et arrière différenciés de cet écho utile, fronts qui se distinguent par leur amplitude inférieure à celle des retours de mer.

La ligne J montre nettement le niveau de sortie de l'intégrateur, plus bas après le front arrière de l'écho utile qu'après le front arrière des autres échos.

Enfin, la ligne K montre que la soustraction des niveaux des lignes G et J engendre une courbe qui présente un pic (désigné par une flèche sur la ligne K), au moment du front avant du retour de mer qui suit le passage de l'intégrateur à un niveau plus bas que son niveau habituel.

Ce pic est positif et n'est donc pas affecté par la diode 42. Il correspond au seul point où la soustraction des lignes G et J fournit un résultat positif du fait de la plus faible valeur du niveau de sortie de l'intégrateur. Seul ce pic est transmis à la sortie du circuit et on recueille une information sur la présence d'un écho utile.

Cette information est décalée par rapport à l'écho utile puisqu'elle apparaît seulement au moment du premier retour de mer qui suit l'écho utile mais ceci a peu d'importance compte tenu du faible intervalle qui sépare les retours de mer les uns des autres.

Les résultats fournis par ce dispositif d'élimination des retours de mer sont extrêmement satisfaisants si l'on examine l'image obtenue par mer agitée. Au lieu d'avoir une image brouillée par un "nuage" correspondant aux retours de mer, les points intéressants apparaissent très clairement comme si la mer était parfaitement calme.

## Revendications

1. Dispositif d'élimination des retours de mer pour un système de détection radar susceptible de fonctionner en présence de houle marine, caractérisé par le fait qu'il comprend:

— un moyen analogique (28) de mémorisation pour conserver en mémoire, jusqu'à l'écho suivant, l'amplitude d'un écho présent dans le signal vidéo comprimé logarithmiquement issu de l'antenne de réception du radar;

— un moyen analogique (36) de soustraction pour soustraire cette amplitude de l'amplitude dudit écho suivant;

— un moyen (10) de détection de la présence de retours de mer, détectant la présence d'échos successifs rapprochés significatifs de la présence de retours de mer et fournissant un signal d'autorisation à un circuit logique (38), connecté entre ledit moyen (28) de mémorisation et ledit moyen (36) de soustraction, pour autoriser l'action dudit moyen (36) de soustraction en cas de présence de retours de mer.

2. Dispositif selon le revendication 1, caractérisé par le fait que le moyen (10) de détection comprend plusieurs bascules monostables (12, 18, 20) redéclenchables agencées pour être déclenchées successivement par des impulsions arrivant avec des écarts temporels inférieurs à des durées prédéterminées par les bascules, ce moyen (10) fournissant ledit signal d'autorisation si des impulsions en nombre prédéterminé sont arrivées avec des écarts temporels inférieurs à ces durées.

3. Dispositif selon l'une des revendications 1 et 2, caractérisé par le fait que le moyen de mémorisation comprend un intégrateur (28) qui peut être remis à zéro par un signal obtenu à partir d'un différentiateur (24) réagissant au front avant des échos.

4. Dispositif selon la revendication 3, caractérisé par le fait que le moyen de mémorisation comporte en outre un différentiateur (26) réagissant aux fronts arrière des échos, et dont la sortie est reliée à l'entrée de l'intégrateur (28).

5. Dispositif selon les revendications 3 et 4, caractérisé par le fait que le moyen (36) de soustraction reçoit sur une entrée la sortie du différentiateur (24) réagissant au front avant des échos et sur une autre entrée le signal de sortie de l'intégrateur (28), et les gains sur les deux voies d'entrées du soustracteur (36) étant tels que les niveaux de tension sur les deux entrées soient identiques lorsqu'arrive un écho d'amplitude identique au précédent.

6. Dispositif selon l'une des revendications précédentes, caractérisé par le fait qu'une diode (42) est placée en sortie du moyen de soustraction, pour éliminer la partie négative du signal issu de ce moyen de soustraction.

## Patentansprüche

1. Anordnung zur Unterdrückung von Meeresechos für ein Radarsystem, das bei Meeresdünung arbeiten kann, dadurch gekennzeichnet, daß sie aufweist:

— ein analoges Speichermittel (28), um bis zum folgenden Echo die Amplitude eines Echos zu speichern, das im logarithmisch komprimierten und von der Radarempfangsantenne kommenden Videosignal vorliegt;

— ein analoges Subtrahiermittel (36), um diese Amplitude von der Amplitude des nachfolgenden Echos abzuziehen;

— ein Mittel (10) zur Erfassung von Meeresechos, das das Vorliegen von rasch aufeinanderfolgenden Echos erfaßt, die für das Vorliegen von Meeresechos signifikativ sind, wobei dieses Mittel ein Freigabesignal an einen logischen Kreis (38) liefert, der zwischen dem Speichermittel (28) und dem Subtrahiermittel (36) angeschlossen ist, um das Subtrahiermittel (36) bei Vorliegen von Meeresechos wirksam werden zu lassen.

2. Vorrichtung nach Anspruch 1, dadurch gekennzeichnet, daß das Erfassungsmittel (10) mehrere wiederauslösbare monostabile Kippstufen (12, 18, 20) enthält, die so geschaltet sind, daß sie nacheinander durch Impulse ausgelöst werden, die mit kürzeren zeitlichen Abständen als durch die Kippstufen vorgegebenen Kippzeiten eintreffen, wobei dieses Mittel (10) das Freigabesignal abgibt, wenn eine vorgegebene Anzahl von Impulsen in kürzeren zeitlichen Abständen als diese Kippzeiten eingetroffen ist.

3. Vorrichtung nach einem der Ansprüche 1 und 2, dadurch gekennzeichnet, daß das Speichermittel einen Integrator (28) enthält, der von einem Signal auf Null gesetzt werden kann, das in einem auf die Vorderflanke der Echos reagierenden Differenzierglied (24) erhalten wird.

4. Vorrichtung nach Anspruch 3, dadurch gekennzeichnet, daß das Speichermittel außerdem ein Differenzierglied (26) aufweist, das auf die rückwärten Flanken der Echos reagiert und dessen Ausgang an den Eingang des Integrators (28) angeschlossen ist.

5. Vorrichtung nach den Ansprüchen 3 und 4, dadurch gekennzeichnet, daß das Subtrahiermittel (36) über einen Eingang das Ausgangssignal des Differenzierglieds (24), das auf die Vorderflanken der Echos reagiert, und über einen anderen Eingang das Ausgangssignal des Integrators (28) zugeführt erhält, wobei die Verstärkungsfaktoren auf den beiden Eingangskanälen des Subtrahierglieds (36) so gewählt sind, daß die Spannungspegel an den beiden Eingängen gleich sind, wenn ein Echo einer gleichen Amplitude wie das vorhergehende Echo auftritt.

6. Vorrichtung nach einem der vorhergehenden Ansprüche, dadurch gekennzeichnet, daß eine Diode (42) an den Ausgang des Subtrahiermittels angeschlossen ist, um den negativen Teil des von dem Subtrahiermittel ausgegebenen Signals zu eliminieren.

**Claims**

1. A device for cancelling the clutter echos for a radar detection system capable of operating in the presence of a rolling sea, characterized in that it comprises:
— an analog memory means (28) for storing the amplitude of an echo present in the logarithmically compressed video signal derived from the radar receiving antenna, until the next following echo arrives;
— an analog subtracting means (36) for subtracting this amplitude from the amplitude of said next following echo;
— a means (10) for detecting the presence of sea clutters, detecting the presence of closely following successive echos signifying the presence of sea clutters, and furnishing an authorization signal to a logic circuit (38) inserted between said memory means (28) and said subtracting means (36) in order to enable said subtracting means (36) in the presence of sea clutters.

2. A device according to claim 1, characterized in that the detection means (10) includes several resettable monostable flip-flops (12, 18, 20) arranged to be set successively by pulses arriving at time intervals which are smaller than durations predetermined by the flip-flops, this means (10) supplying said authorization signal whenever a given number of pulses arrives with time intervals which are smaller than said durations.

3. A device according to one of claims 1 and 2, characterized in that the memory means includes an integrator (28) which can be set to zero by a signal derived from a differentiating circuit (24) which replies to the leading edge of the echos.

4. A device according to claim 3, characterized in that the memory means further includes a differentiating circuit (26) replying to the rear edge of the echos and the output of which is connected to the input of the integrator (28).

5. A device according to claims 3 and 4, characterized in that the subtracting means (36) receives via an input the output signal of the differentiating circuit (24) replying to the leading edge of the echos, and via another input the output signal of the integrator (28), the signal gains on the two input channels of the subtractor (36) being such that the voltage levels on these two inputs are identical if an echo with an amplitude identical to the preceding one.

6. A device according to one of the preceding claims, characterized in that a diode (42) is branched at the output of the subtracting means in order to eliminate the negative portion of the signal supplied by this subtracting means.

0 085 628

Fig.1

Fig.2

**0 085 628**

Fig.3

Fig.4

Fig.5

Fig.6